# EUROPEAN PATENT SPECIFICATION

(11) **EP 3 143 744 B1**
(45) Date of publication and mention of the grant of the patent: **12.02.2020**
(21) Application number: 15724833.7
(22) Date of filing: 30.04.2015
(51) Int. Cl.: H04L 29/06

(54) **VOTING STRATEGY OPTIMIZATION USING DISTRIBUTED CLASSIFIERS**
OPTIMISIERUNG EINER WAHLSTRATEGIE UNTER VERWENDUNG VON VERTEILTEN KLASSIFIKATOREN
OPTIMISATION D'UNE STRATÉGIE DE VOTE PAR DES CLASSEURS DISTRIBUÉS

(30) Priority: 12.05.2014 US 201414275344
(43) Date of publication of application: 22.03.2017
(73) Proprietor: Cisco Technology, Inc., San Jose, CA 95134 (US)
(72) Inventor: CRUZ MOTA, Javier, CH-1042 Assens (CH); VASSEUR, Jean-philippe, F-38410 Saint Martin d'Urage (FR); DI PIETRO, Andrea, CH-1007 Lausanne (CH)
(74) Representative: Kazi, Ilya
(86) International application number: PCT/US2015/028471
(87) International publication number: WO 2015/175233

(56) References cited:
- WO-A1-03/029934

## Description

### TECHNICAL FIELD

The present disclosure relates generally to computer networks, and, more particularly, to optimizing a voting process used by classifiers distributed within a network.

### BACKGROUND

Low power and Lossy Networks (LLNs), e.g., sensor networks, have a myriad of applications, such as Smart Grid and Smart Cities. Various challenges are presented with LLNs, such as lossy links, low bandwidth, battery operation, low memory and/or processing capability of a device, etc. Changing environmental conditions may also affect device communications. For example, physical obstructions (e.g., changes in the foliage density of nearby trees, the opening and closing of doors, etc.), changes in interference (e.g., from other wireless networks or devices), propagation characteristics of the media (e.g., temperature or humidity changes, etc.), and the like also present unique challenges to LLNs.

One type of network attack that is of particular concern in the context of LLNs is a Denial of Service (DoS) attack. Typically, DoS attacks operate by attempting to exhaust the available resources of a service (e.g., bandwidth, memory, etc.), thereby preventing legitimate traffic from using the resource. A DoS attack may also be distributed, to conceal the presence of the attack. For example, a distributed DoS (DDoS) attack may involve multiple attackers sending malicious requests, making it more difficult to distinguish when an attack is underway.

WO-A1-03/029934 describes an agent-based intrusion detection system in which agents at each node of a network act co-operatively to detect attacks and share attack signatures and solutions via a message exchange mechanism

The invention relates to a method, an apparatus and a computer-readable medium as defined in independent claims 1, 11 and 12, respectively.

Various embodiments are defined in the dependent claims

### BRIEF DESCRIPTION OF THE DRAWINGS

The embodiments herein may be better understood by referring to the following description in conjunction with the accompanying drawings in which like reference numerals indicate identically or functionally similar elements, of which:
FIG. 1 illustrates an example communication network;
FIG. 2 illustrates an example network device/node;
FIG. 3 illustrates an example message;
FIG. 4 illustrates an example directed acyclic graph (DAG) in the communication network of FIG. 1;
FIGS. 5A-5B illustrate an example of the detection and reporting of a potential network attack;
FIGS. 6A-6D illustrate an example of attack detection using distributed voting;
FIGS. 7A-7E illustrate an example of the optimization of a distributed voting process;
FIGS. 8A-8D illustrate an example of the re-optimization of a distributed voting process;
FIG. 9 illustrates an example of voting performance as a function of the number of voters;
FIG. 10 illustrates an example simplified procedure for optimizing a distributed voting mechanism within a network; and
FIG. 11 illustrates an example simplified procedure for performing a local vote using an optimized set of voting classifiers.

### DESCRIPTION OF EXAMPLE EMBODIMENTS

### Overview

Aspects of the invention are set out in the independent claims and preferred features are set out in the dependent claims.

According to one or more embodiments of the disclosure, voting optimization requests that identify a validation data set are sent to a plurality of network nodes.

Voting optimization data is received from the plurality of network nodes that was generated by executing classifiers using the validation data set. A set of one or more voting classifiers is then selected from among the classifiers based on the voting optimization data. One or more network nodes that host a voting classifier in the set of one or more selected voting classifiers is then notified of the selection.

### Description

A computer network is a geographically distributed collection of nodes interconnected by communication links and segments for transporting data between end nodes, such as personal computers and workstations, or other devices, such as sensors, etc. Many types of networks are available, ranging from local area networks (LANs) to wide area networks (WANs). LANs typically connect the nodes over dedicated private communications links located in the same general physical location, such as a building or campus. WANs, on the other hand, typically connect geographically dispersed nodes over long-distance communications links, such as common carrier telephone lines, optical lightpaths, synchronous optical networks (SONET), synchronous digital hierarchy (SDH) links, or Powerline Communications (PLC) such as IEEE 61334, IEEE PI 901.2, and others. In addition, a Mobile Ad-Hoc Network (MANET) is a kind of wireless ad-hoc network, which is generally considered a self-configuring network of mobile routers (and associated hosts) connected by wireless links, the union of which forms an arbitrary topology.

Smart object networks, such as sensor networks, in particular, are a specific type of network having spatially distributed autonomous devices such as sensors, actuators, etc., that cooperatively monitor physical or environmental conditions at different locations, such as, e.g., energy/power consumption, resource consumption (e.g., water/gas/etc. for advanced metering infrastructure or "AMI" applications) temperature, pressure, vibration, sound, radiation, motion, pollutants, etc. Other types of smart objects include actuators, e.g., responsible for turning on/off an engine or perform any other actions. Sensor networks, a type of smart object network, are typically shared-media networks, such as wireless or PLC networks. That is, in addition to one or more sensors, each sensor device (node) in a sensor network may generally be equipped with a radio transceiver or other communication port such as PLC, a microcontroller, and an energy source, such as a battery. Often, smart object networks are considered field area networks (FANs), neighborhood area networks (NANs), personal area networks (PANs), etc. Generally, size and cost constraints on smart object nodes (e.g., sensors) result in corresponding constraints on resources such as energy, memory, computational speed and bandwidth.

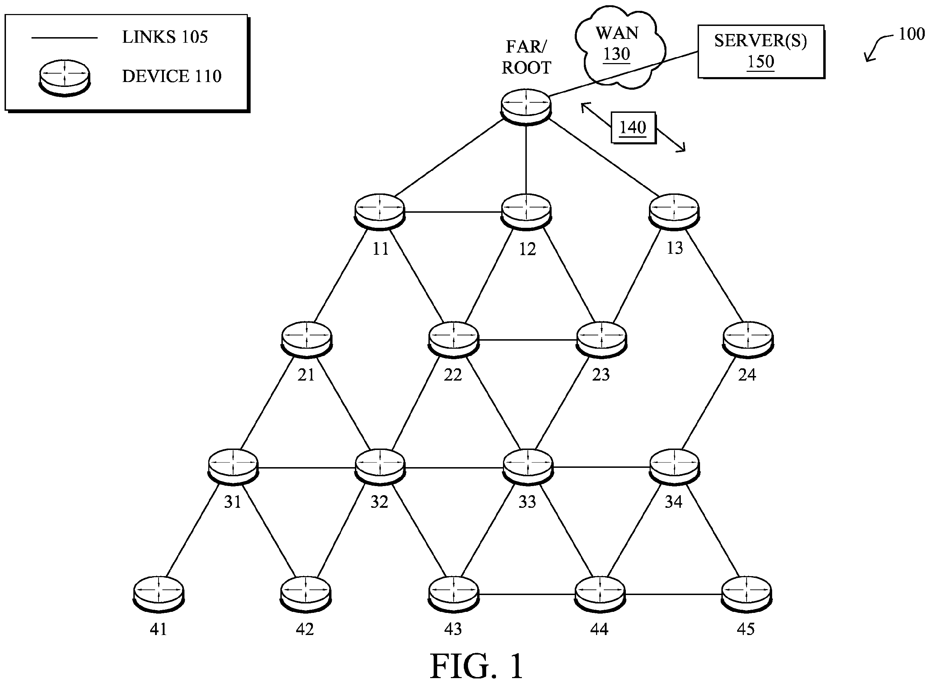

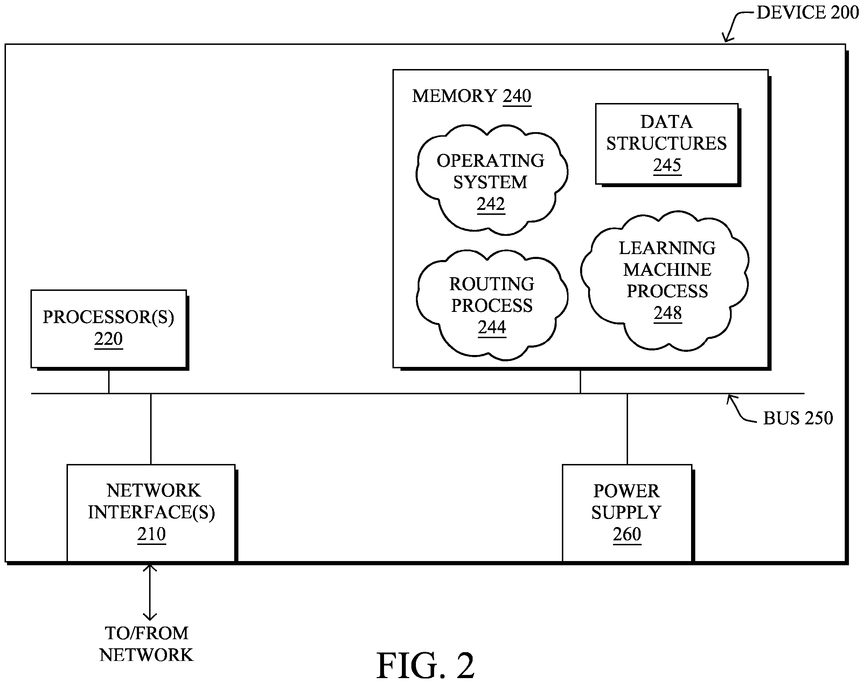

FIG. 1 is a schematic block diagram of an example computer network 100 illustratively comprising nodes/devices 110 (e.g., labeled as shown, "root," "11," "12," ... "45," and described in FIG. 2 below) interconnected by various methods of communication. For instance, the links 105 may be wired links or shared media (e.g., wireless links, PLC links, etc.) where certain nodes 110, such as, e.g., routers, sensors, computers, etc., may be in communication with other nodes 110, e.g., based on distance, signal strength, current operational status, location, etc. The illustrative root node, such as a field area router (FAR) of a FAN, may interconnect the local network with a WAN 130, which may house one or more other relevant devices such as management devices or servers 150, e.g., a network management server (NMS), a dynamic host configuration protocol (DHCP) server, a constrained application protocol (CoAP) server, etc. Those skilled in the art will understand that any number of nodes, devices, links, etc. may be used in the computer network, and that the view shown herein is for simplicity. Also, those skilled in the art will further understand that while the network is shown in a certain orientation, particularly with a "root" node, the network 100 is merely an example illustration that is not meant to limit the disclosure.

Data packets 140 (e.g., traffic and/or messages) may be exchanged among the nodes/devices of the computer network 100 using predefined network communication protocols such as certain known wired protocols, wireless protocols (e.g., IEEE Std. 802.15.4, WiFi, Bluetooth®, etc.), PLC protocols, or other shared-media protocols where appropriate. In this context, a protocol consists of a set of rules defining how the nodes interact with each other.

FIG. 2 is a schematic block diagram of an example node/device 200 that may be used with one or more embodiments described herein, e.g., as any of the nodes or devices shown in FIG. 1 above. The device may comprise one or more network interfaces 210 (e.g., wired, wireless, PLC, etc.), at least one processor 220, and a memory 240 interconnected by a system bus 250, as well as a power supply 260 (e.g., battery, plug-in, etc.).

The network interface(s) 210 contain the mechanical, electrical, and signaling circuitry for communicating data over links 105 coupled to the network 100. The network interfaces may be configured to transmit and/or receive data using a variety of different communication protocols. Note, further, that the nodes may have two different types of network connections 210, e.g., wireless and wired/physical connections, and that the view herein is merely for illustration. Also, while the network interface 210 is shown separately from power supply 260, for PLC (where the PLC signal may be coupled to the power line feeding into the power supply) the network interface 210 may communicate through the power supply 260, or may be an integral component of the power supply.

The memory 240 comprises a plurality of storage locations that are addressable by the processor 220 and the network interfaces 210 for storing software programs and data structures associated with the embodiments described herein. Note that certain devices may have limited memory or no memory (e.g., no memory for storage other than for programs/processes operating on the device and associated caches). The processor 220 may comprise hardware elements or hardware logic adapted to execute the software programs and manipulate the data structures 245. An operating system 242, portions of which are typically resident in memory 240 and executed by the processor, functionally organizes the device by, inter alia, invoking operations in support of software processes and/or services executing on the device. These software processes and/or services may comprise a routing process/services 244 and an illustrative "learning machine" process 248, which may be configured depending upon the particular node/device within the network 100 with functionality ranging from intelligent learning machine processes to merely communicating with intelligent learning machines, as described herein. Note also that while the learning machine process 248 is shown in centralized memory 240, alternative embodiments provide for the process to be specifically operated within the network interfaces 210.

It will be apparent to those skilled in the art that other processor and memory types, including various computer-readable media, may be used to store and execute program instructions pertaining to the techniques described herein. Also, while the description illustrates various processes, it is expressly contemplated that various processes may be embodied as modules configured to operate in accordance with the techniques herein (e.g., according to the functionality of a similar process). Further, while the processes have been shown separately, those skilled in the art will appreciate that processes may be routines or modules within other processes.

Routing process (services) 244 contains computer executable instructions executed by the processor 220 to perform functions provided by one or more routing protocols, such as proactive or reactive routing protocols as will be understood by those skilled in the art. These functions may, on capable devices, be configured to manage a routing/forwarding table (a data structure 245) containing, e.g., data used to make routing/forwarding decisions. In particular, in proactive routing, connectivity is discovered and known prior to computing routes to any destination in the network, e.g., link state routing such as Open Shortest Path First (OSPF), or Intermediate-System-to-Intermediate-System (ISIS), or Optimized Link State Routing (OLSR). Reactive routing, on the other hand, discovers neighbors (i.e., does not have an a priori knowledge of network topology), and in response to a needed route to a destination, sends a route request into the network to determine which neighboring node may be used to reach the desired destination. Example reactive routing protocols may comprise Ad-hoc On-demand Distance Vector (AODV), Dynamic Source Routing (DSR), DYnamic MANET On-demand Routing (DYMO), etc. Notably, on devices not capable or configured to store routing entries, routing process 244 may consist solely of providing mechanisms necessary for source routing techniques. That is, for source routing, other devices in the network can tell the less capable devices exactly where to send the packets, and the less capable devices simply forward the packets as directed.

Learning machine process 248 contains computer executable instructions executed by the processor 220 to perform various functions, such as attack detection and reporting. In general, machine learning is concerned with the design and the development of techniques that take as input empirical data (such as network statistics and performance indicators), and recognize complex patterns in these data. One very common pattern among machine learning techniques is the use of an underlying model M, whose parameters are optimized for minimizing the cost function associated to M, given the input data. For instance, in the context of classification, the model M may be a straight line that separates the data into two classes such that M = a^{∗}x + b^{∗}y + c and the cost function would be the number of misclassified points. The learning process then operates by adjusting the parameters a,b,c such that the number of misclassified points is minimal. After this optimization phase (or learning phase), the model M can be used very easily to classify new data points. Often, M is a statistical model, and the cost function is inversely proportional to the likelihood of M, given the input data.

As also noted above, learning machines (LMs) are computational entities that rely on one or more machine learning processes for performing a task for which they haven't been explicitly programmed to perform. In particular, LMs are capable of adjusting their behavior to their environment. In the context of LLNs, and more generally in the context of the IoT (or Internet of Everything, IoE), this ability will be very important, as the network will face changing conditions and requirements, and the network will become too large for efficiently management by a network operator.

Artificial Neural Networks (ANNs) are a type of machine learning technique whose underlying mathematical models that were developed inspired by the hypothesis that mental activity consists primarily of electrochemical activity between interconnected neurons. ANNs are sets of computational units (neurons) connected by directed weighted links. By combining the operations performed by neurons and the weights applied by the links, ANNs are able to perform highly non-linear operations to input data. The interesting aspect of ANNs, though, is not that they can produce highly non-linear outputs of the input, but that they can learn to reproduce a predefined behavior through a training process. Accordingly, an ANN may be trained to identify deviations in the behavior of a network that could indicate the presence of a network attack (e.g., a change in packet losses, link delays, number of requests, etc.).

Low power and Lossy Networks (LLNs), e.g., certain sensor networks, may be used in a myriad of applications such as for "Smart Grid" and "Smart Cities." A number of challenges in LLNs have been presented, such as:
1) Links are generally lossy, such that a Packet Delivery Rate/Ratio (PDR) can dramatically vary due to various sources of interferences, e.g., considerably affecting the bit error rate (BER);
2) Links are generally low bandwidth, such that control plane traffic may generally be bounded and negligible compared to the low rate data traffic;
3) There are a number of use cases that require specifying a set of link and node metrics, some of them being dynamic, thus requiring specific smoothing functions to avoid routing instability, considerably draining bandwidth and energy;
4) Constraint-routing may be required by some applications, e.g., to establish routing paths that will avoid non-encrypted links, nodes running low on energy, etc.;
5) Scale of the networks may become very large, e.g., on the order of several thousands to millions of nodes; and
6) Nodes may be constrained with a low memory, a reduced processing capability, a low power supply (e.g., battery).

In other words, LLNs are a class of network in which both the routers and their interconnect are constrained: LLN routers typically operate with constraints, e.g., processing power, memory, and/or energy (battery), and their interconnects are characterized by, illustratively, high loss rates, low data rates, and/or instability. LLNs are comprised of anything from a few dozen and up to thousands or even millions of LLN routers, and support point-to-point traffic (between devices inside the LLN), point-to-multipoint traffic (from a central control point to a subset of devices inside the LLN) and multipoint-to-point traffic (from devices inside the LLN towards a central control point).

An example implementation of LLNs is an "Internet of Things" network. Loosely, the term "Internet of Things" or "IoT" may be used by those in the art to refer to uniquely identifiable objects (things) and their virtual representations in a network-based architecture. In particular, the next frontier in the evolution of the Internet is the ability to connect more than just computers and communications devices, but rather the ability to connect "objects" in general, such as lights, appliances, vehicles, HVAC (heating, ventilating, and air-conditioning), windows and window shades and blinds, doors, locks, etc. The "Internet of Things" thus generally refers to the interconnection of objects (e.g., smart objects), such as sensors and actuators, over a computer network (e.g., IP), which may be the Public Internet or a private network. Such devices have been used in the industry for decades, usually in the form of non-IP or proprietary protocols that are connected to IP networks by way of protocol translation gateways. With the emergence of a myriad of applications, such as the smart grid, smart cities, and building and industrial automation, and cars (e.g., that can interconnect millions of objects for sensing things like power quality, tire pressure, and temperature and that can actuate engines and lights), it has been of the utmost importance to extend the IP protocol suite for these networks.

An example protocol specified in an Internet Engineering Task Force (IETF) Proposed Standard, Request for Comment (RFC) 6550, entitled "RPL: IPv6 Routing Protocol for Low Power and Lossy Networks" by Winter, et al. (March 2012), provides a mechanism that supports multipoint-to-point (MP2P) traffic from devices inside the LLN towards a central control point (e.g., LLN Border Routers (LBRs) or "root nodes/devices" generally), as well as point-to-multipoint (P2MP) traffic from the central control point to the devices inside the LLN (and also point-to-point, or "P2P" traffic). RPL (pronounced "ripple") may generally be described as a distance vector routing protocol that builds a Directed Acyclic Graph (DAG) for use in routing traffic/packets 140, in addition to defining a set of features to bound the control traffic, support repair, etc. Notably, as may be appreciated by those skilled in the art, RPL also supports the concept of Multi-Topology-Routing (MTR), whereby multiple DAGs can be built to carry traffic according to individual requirements.

A DAG is a directed graph having the property that all edges (and/or vertices) are oriented in such a way that no cycles (loops) are supposed to exist. All edges are contained in paths oriented toward and terminating at one or more root nodes (e.g., "clusterheads or "sinks"), often to interconnect the devices of the DAG with a larger infrastructure, such as the Internet, a wide area network, or other domain. In addition, a Destination Oriented DAG (DODAG) is a DAG rooted at a single destination, i.e., at a single DAG root with no outgoing edges. A "parent" of a particular node within a DAG is an immediate successor of the particular node on a path towards the DAG root, such that the parent has a lower "rank" than the particular node itself, where the rank of a node identifies the node's position with respect to a DAG root (e.g., the farther away a node is from a root, the higher is the rank of that node). Further, in certain embodiments, a sibling of a node within a DAG may be defined as any neighboring node which is located at the same rank within a DAG. Note that siblings do not necessarily share a common parent, and routes between siblings are generally not part of a DAG since there is no forward progress (their rank is the same). Note also that a tree is a kind of DAG, where each device/node in the DAG generally has one parent or one preferred parent.

DAGs may generally be built (e.g., by a DAG process) based on an Objective Function (OF). The role of the Objective Function is generally to specify rules on how to build the DAG (e.g. number of parents, backup parents, etc.).

In addition, one or more metrics/constraints may be advertised by the routing protocol to optimize the DAG against. Also, the routing protocol allows for including an optional set of constraints to compute a constrained path, such as if a link or a node does not satisfy a required constraint, it is "pruned" from the candidate list when computing the best path. (Alternatively, the constraints and metrics may be separated from the OF.) Additionally, the routing protocol may include a "goal" that defines a host or set of hosts, such as a host serving as a data collection point, or a gateway providing connectivity to an external infrastructure, where a DAG's primary objective is to have the devices within the DAG be able to reach the goal. In the case where a node is unable to comply with an objective function or does not understand or support the advertised metric, it may be configured to join a DAG as a leaf node. As used herein, the various metrics, constraints, policies, etc., are considered "DAG parameters."

Illustratively, example metrics used to select paths (e.g., preferred parents) may comprise cost, delay, latency, bandwidth, expected transmission count (ETX), etc., while example constraints that may be placed on the route selection may comprise various reliability thresholds, restrictions on battery operation, multipath diversity, bandwidth requirements, transmission types (e.g., wired, wireless, etc.). The OF may provide rules defining the load balancing requirements, such as a number of selected parents (e.g., single parent trees or multi-parent DAGs). Notably, an example for how routing metrics and constraints may be obtained may be found in an IETF RFC, entitled "Routing Metrics used for Path Calculation in Low Power and Lossy Networks" <RFC 6551> by Vasseur, et al. (March 2012 version). Further, an example OF (e.g., a default OF) may be found in an IETF RFC, entitled "RPL Objective Function 0" <RFC 6552> by Thubert (March 2012 version) and "The Minimum Rank Objective Function with Hysteresis" <RFC 6719> by O. Gnawali et al. (September 2012 version).

Building a DAG may utilize a discovery mechanism to build a logical representation of the network, and route dissemination to establish state within the network so that routers know how to forward packets toward their ultimate destination. Note that a "router" refers to a device that can forward as well as generate traffic, while a "host" refers to a device that can generate but does not forward traffic. Also, a "leaf' may be used to generally describe a non-router that is connected to a DAG by one or more routers, but cannot itself forward traffic received on the DAG to another router on the DAG. Control messages may be transmitted among the devices within the network for discovery and route dissemination when building a DAG.

According to the illustrative RPL protocol, a DODAG Information Object (DIO) is a type of DAG discovery message that carries information that allows a node to discover a RPL Instance, learn its configuration parameters, select a DODAG parent set, and maintain the upward routing topology. In addition, a Destination Advertisement Object (DAO) is a type of DAG discovery reply message that conveys destination information upwards along the DODAG so that a DODAG root (and other intermediate nodes) can provision downward routes. A DAO message includes prefix information to identify destinations, a capability to record routes in support of source routing, and information to determine the freshness of a particular advertisement. Notably, "upward" or "up" paths are routes that lead in the direction from leaf nodes towards DAG roots, e.g., following the orientation of the edges within the DAG. Conversely, "downward" or "down" paths are routes that lead in the direction from DAG roots towards leaf nodes, e.g., generally going in the opposite direction to the upward messages within the DAG.

Generally, a DAG discovery request (e.g., DIO) message is transmitted from the root device(s) of the DAG downward toward the leaves, informing each successive receiving device how to reach the root device (that is, from where the request is received is generally the direction of the root). Accordingly, a DAG is created in the upward direction toward the root device. The DAG discovery reply (e.g., DAO) may then be returned from the leaves to the root device(s) (unless unnecessary, such as for UP flows only), informing each successive receiving device in the other direction how to reach the leaves for downward routes. Nodes that are capable of maintaining routing state may aggregate routes from DAO messages that they receive before transmitting a DAO message. Nodes that are not capable of maintaining routing state, however, may attach a next-hop parent address. The DAO message is then sent directly to the DODAG root that can in turn build the topology and locally compute downward routes to all nodes in the DODAG. Such nodes are then reachable using source routing techniques over regions of the DAG that are incapable of storing downward routing state. In addition, RPL also specifies a message called the DIS (DODAG Information Solicitation) message that is sent under specific circumstances so as to discover DAG neighbors and join a DAG or restore connectivity.

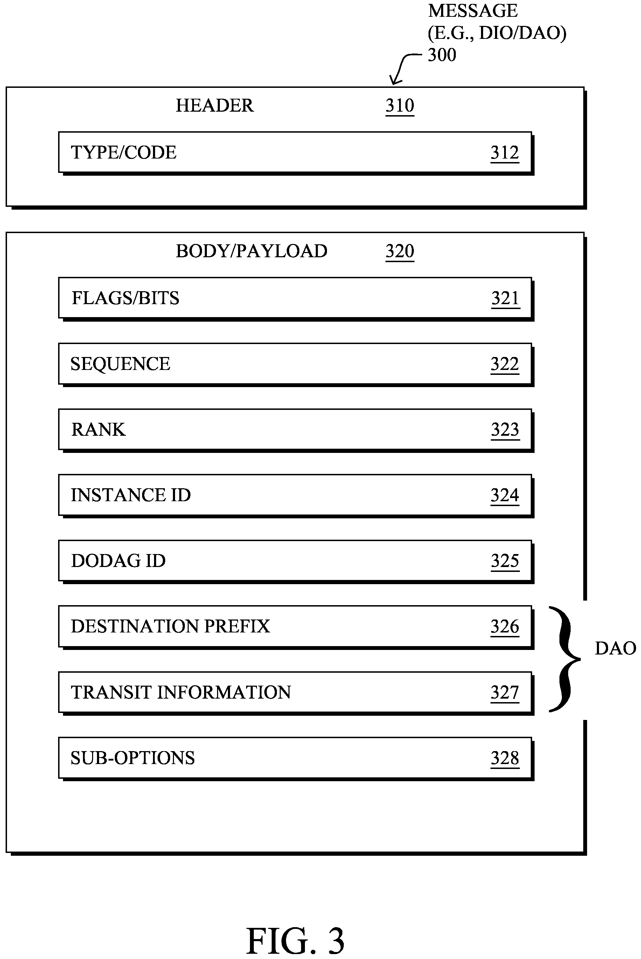

FIG. 3 illustrates an example simplified control message format 300 that may be used for discovery and route dissemination when building a DAG, e.g., as a DIO, DAO, or DIS message. Message 300 illustratively comprises a header 310 with one or more fields 312 that identify the type of message (e.g., a RPL control message), and a specific code indicating the specific type of message, e.g., a DIO, DAO, or DIS. Within the body/payload 320 of the message may be a plurality of fields used to relay the pertinent information. In particular, the fields may comprise various flags/bits 321, a sequence number 322, a rank value 323, an instance ID 324, a DODAG ID 325, and other fields, each as may be appreciated in more detail by those skilled in the art. Further, for DAO messages, additional fields for destination prefixes 326 and a transit information field 327 may also be included, among others (e.g., DAO_Sequence used for ACKs, etc.). For any type of message 300, one or more additional sub-option fields 328 may be used to supply additional or custom information within the message 300. For instance, an objective code point (OCP) sub-option field may be used within a DIO to carry codes specifying a particular objective function (OF) to be used for building the associated DAG. Alternatively, sub-option fields 328 may be used to carry other certain information within a message 300, such as indications, requests, capabilities, lists, notifications, etc., as may be described herein, e.g., in one or more type-length-value (TLV) fields.

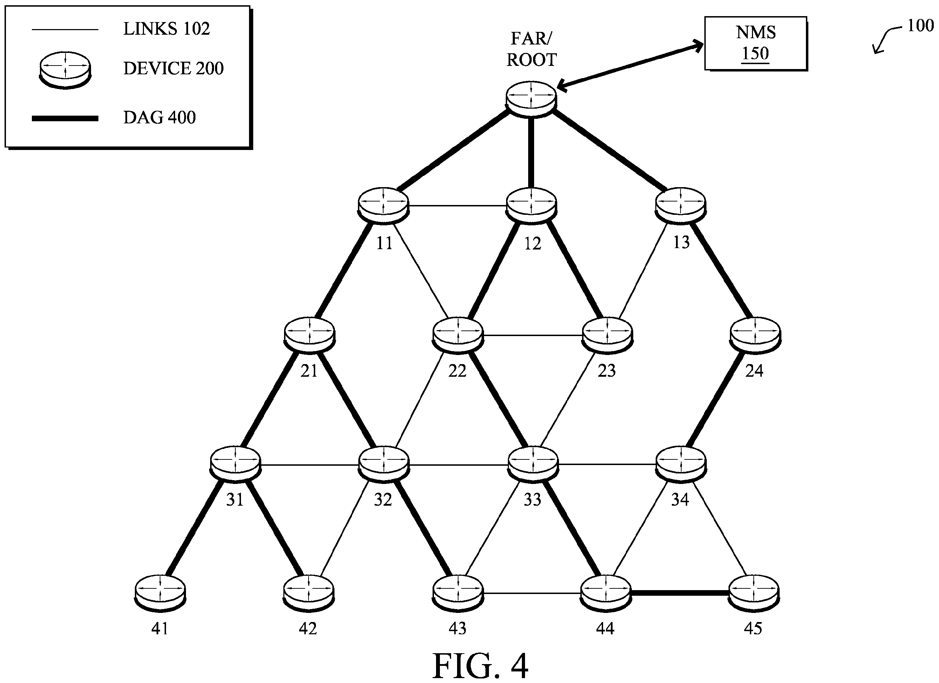

FIG. 4 illustrates an example simplified DAG that may be created, e.g., through the techniques described above, within network 100 of FIG. 1. For instance, certain links 105 may be selected for each node to communicate with a particular parent (and thus, in the reverse, to communicate with a child, if one exists). These selected links form the DAG 410 (shown as bolded lines), which extends from the root node toward one or more leaf nodes (nodes without children). Traffic/packets 140 (shown in FIG. 1) may then traverse the DAG 410 in either the upward direction toward the root or downward toward the leaf nodes, particularly as described herein.

As noted above, LLNs are typically limited in terms of available resources and tend to be more dynamic than other forms of networks, leading to a number of challenges when attempting to detect DoS and other forms of network attacks. In particular, the limited computing resources available to a given network node may prevent the node from hosting a full-fledged learning machine process. In some cases, the node may simply export observation data to a learning machine hosted by a device with greater resources (e.g., a FAR). However, doing so also increases traffic overhead in the network, which may impact performance in an LLN.

According to various embodiments, lightweight learning machine classifiers may be distributed to network nodes for purposes of attack detection. In general, a classifier refers to a machine learning process that is operable to associate a label from among a set of labels with to an input set of data. For example, a classifier may apply a label (e.g., "Attack" or "No Attack") to a given set of network metrics (e.g., traffic rate, etc.). The distributed classifiers may be considered "lightweight" in that they may have lower computational requirements than a full-fledged classifier, at the tradeoff of lower performance. To improve attack detection, a central computing device (e.g., a FAR, NMS, etc.) that has greater resources may execute a more computationally intensive classifier in comparison to the distributed lightweight classifier. In cases in which a distributed classifier detects an attack, it may provide data to the central device to validate the results and/or to initiate countermeasures. However, since the performance of a distributed classifier may be relatively low, this also means that there may be a greater amount of false positives reported to the central classifier.

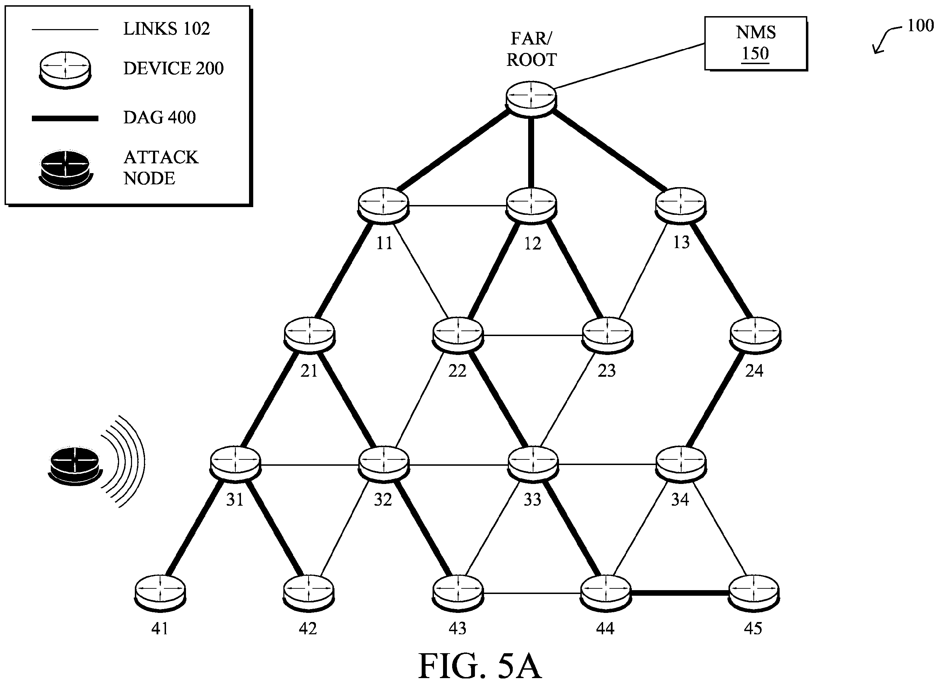

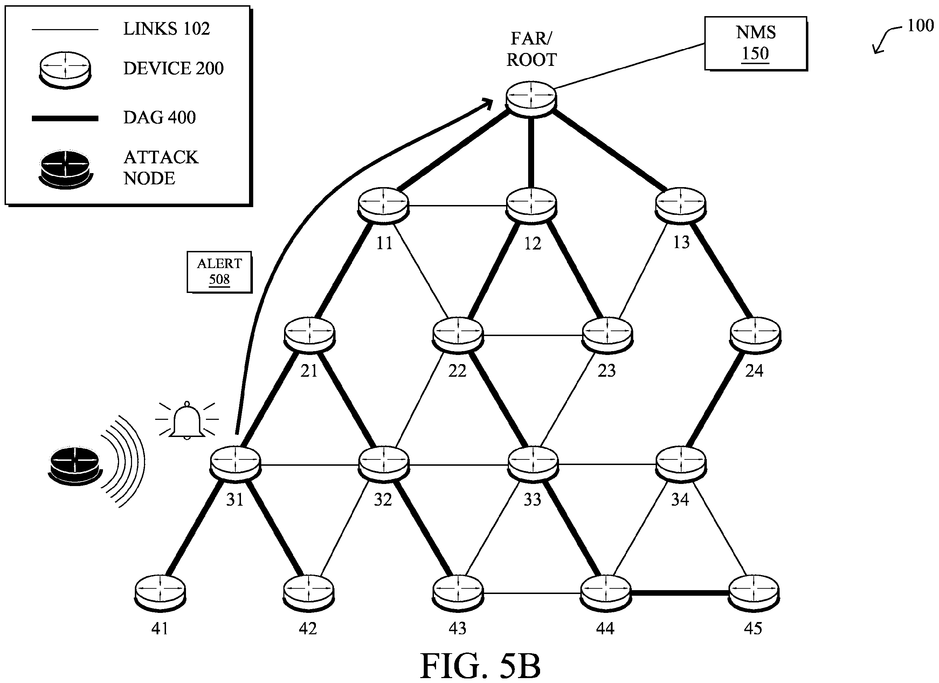

Referring now to FIGS. 5A-5B, an example is illustrated of a network attack being detected and reported within network 100. Assume for illustrative purposes that lightweight classifiers are distributed to the various nodes in network 100 and that a more power classifier is executed by the FAR. As shown in FIG. 5A, an attack node/device may launch an attack targeted at node 31. As a result of the attack, a lightweight classifier on node 31 may detect the attack based on an observed feature set of information (e.g., transmission success rates, reception success rates, etc.), as shown in FIG. 5B. In response, node 31 may generate and send an alert 508 to a supervisory device (e.g., the FAR) to verify the attack using a more powerful classifier and/or to take corrective measures. Alternatively, or in addition to alerting the FAR, node 31 may broadcast alerts to the other nodes in network 100, to initiate corrective measures. In cases in which alert 508 is a false positive, however, this means unnecessary traffic within network 100, which may already have limited bandwidth available.

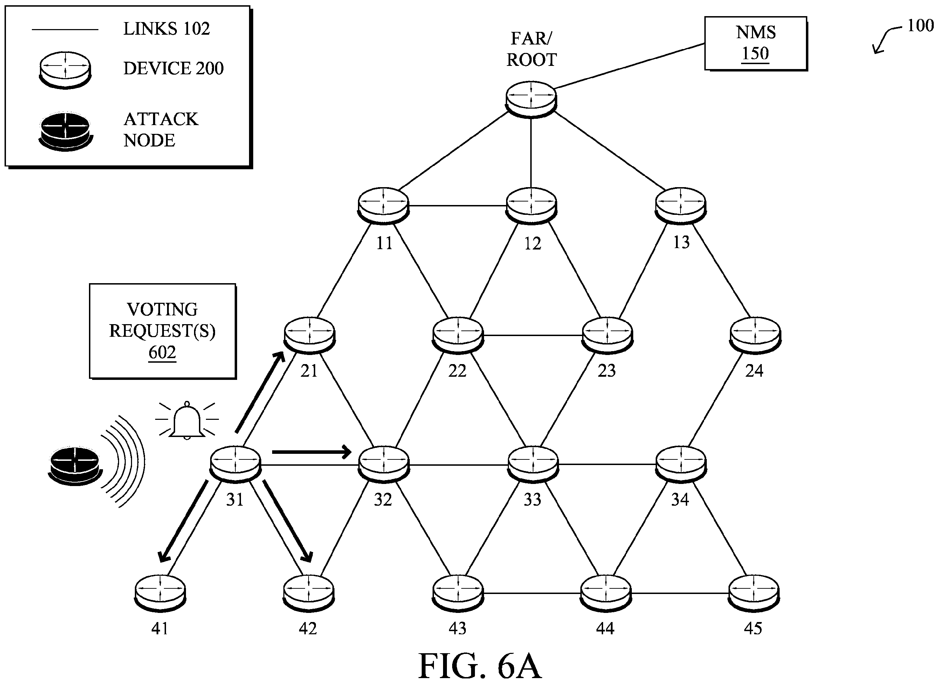

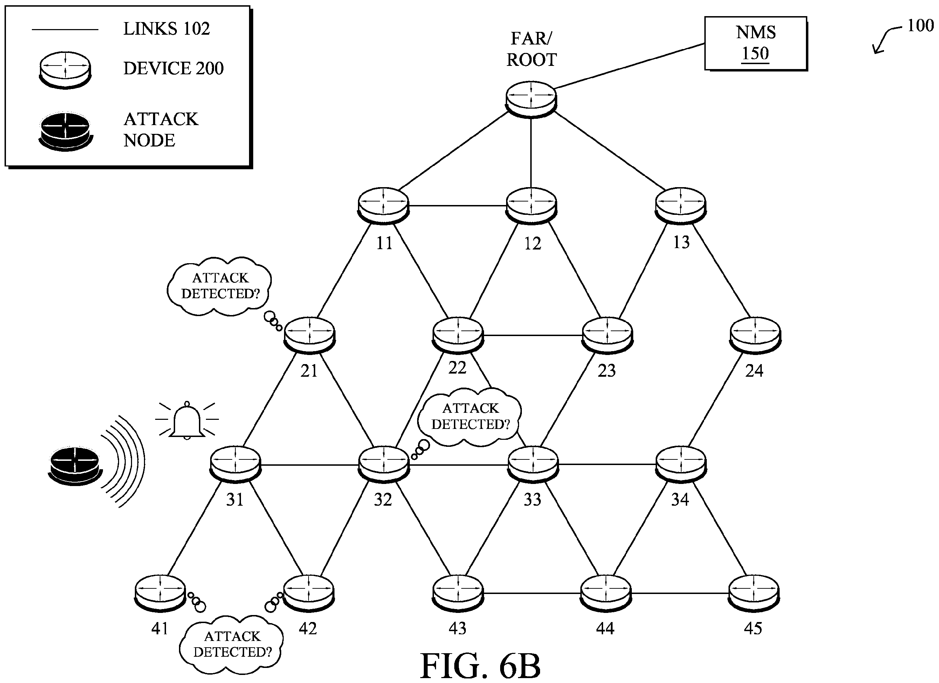

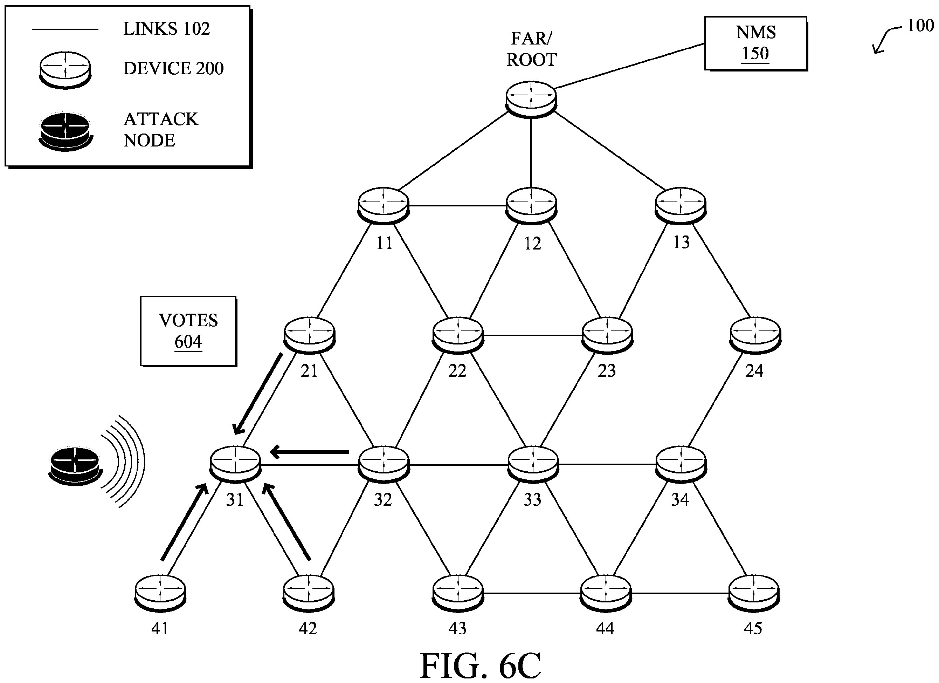

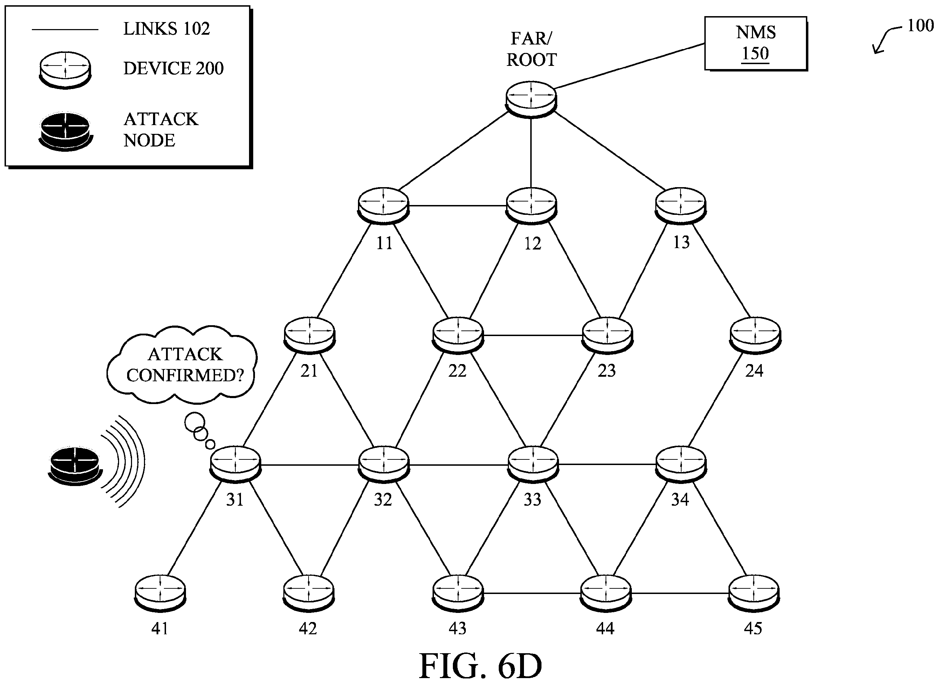

To reduce the number of false positives, a voting mechanism may be implemented within network 100 to validate a detected attack before the supervisory device is notified. For example, as shown in FIGS. 6A-6D, a distributed voting mechanism is shown in which a particular node initiates a voting process to confirm an attack before taking further measures (e.g., sending an alert to the FAR, alerting other nodes, etc.). In various embodiments, the nodes that participate in the voting process may be located anywhere in the network (e.g., voters may be neighboring nodes, non-neighboring nodes, or even nodes that are connected to a different FAR/root). After detection of an attack, node 31 may send voting requests 602 to a set of authorized voters, as shown in FIG. 6A. In response, the voters may use their own local classifiers to determine whether an attack is present, as depicted in FIG. 6B. Such a vote may be based on observations by the voters themselves or observation data from node 31 that is included in voting requests 602. As shown in FIG. 6C, the voters then respond to node 31 with votes 604. Node 31 then uses votes 604 to determine whether the detected attack is confirmed, as shown in FIG. 6D. If so, node 31 may then send an alert to the FAR or take other measures. According to various embodiments, such a voting mechanism may also be optimized to determine which voters should participate in a vote, thereby reducing network overhead as a result of a vote. To further reduce the change of a false positive, optimizations may also be made regarding how consensus is reached (e.g., by setting a threshold number of votes for a confirmation to occur, etc.).

### Voting Strategy Optimization Using Distributed Classifiers

The techniques herein provide mechanisms for computing an optimum voting strategy for a given classification problem between classifiers distributed across a network. In some aspects, network nodes/devices hosting classifiers that are potentially of interest are requested to apply their classifiers on a known validation set (e.g., a set of validation data containing known ground-truths). The classification results on this validation set may then be collected and used by an optimization process for computing an optimum voting strategy (e.g., which nodes/classifiers are to participate in a vote and the minimum value for the agreement between these classifiers). For example, the optimal voting strategy may be determined by minimizing or maximizing an objective function that is subject to one or more constraints. In further aspects, once the optimum voting strategy has been computed, the involved classifiers may be uploaded to the device that initiated the voting optimization process, allowing for local voting. The amount of information exchanged in the voting process after optimization may be reduced, making this approach well suited for applications such as the IoT.

Specifically, according to one or more embodiments of the disclosure as described in detail below, voting optimization requests that identify a validation data set are sent to a plurality of network nodes. Voting optimization data is received from the plurality of network nodes that was generated by executing classifiers using the validation data set. A set of one or more voting classifiers is then selected from among the classifiers based on the voting optimization data. One or more network nodes that host a voting classifier in the set of one or more selected voting classifiers is then notified of the selection.

Illustratively, the techniques described herein may be performed by hardware, software, and/or firmware, such as in accordance with the learning machine process 248, which may contain computer executable instructions executed by the processor 220 (or independent processor of interfaces 210) to perform functions relating to the techniques described herein, e.g., in conjunction with routing process 244. For example, the techniques herein may be treated as extensions to conventional protocols, such as the various PLC protocols or wireless communication protocols, and as such, may be processed by similar components understood in the art that execute those protocols, accordingly.

The following terms are introduced to aid in the understanding of the techniques herein:
- LCE(i): the *i^{th}* Learning Classification Entity(LCE). In general, an LCE refers to a network device that hosts a learning machine classifier (e.g., a classifier used for attack detection). Any number of different types of network devices, such as routers, switches, data centers, or any other computing device that can perform classification tasks may be deployed as an LCE.
- C(i,j): the *j^{th}* classifier hosted by LCE(i). In other words, LCE(i) may host multiple classifiers. In various embodiments, the types of classifiers (e.g., ANNs, SVMs, etc.) may differ on a particular LCE and/or across different LCEs.
- L(i,j): the set of labels (e.g., output classes) of C(i,j). For instance L(i,j)={"Attack", "Normal"} is one possible set of labels that may be used for attack detection.
- V: a unique identifier for a particular validation set having known labels for each sample in the set.
- C(V): constraints to be applied to V. For instance, one constraint may specify that only samples from the validation set that were taken within a given time period are to be considered. In another example, a constraint may specify that only samples in the validation set that were taken after a given date should be considered.
- N: the set of classifiers optimally selected for the voting. For example, N={C(k,l), C(p,q), C(t,r)} is one possible set of classifiers that may be designated as optimal.
- k: the optimal consensus computed. Said differently, k may be a vote count threshold that may be reached before a consensus among the voters is reached. For example, if k=2, then at least 2 classifiers may agree for there to be a consensus (e.g., that an attack is detected). Note that k may be at least 1 and, at most, the size of the set N (i.e., 1<= k <= |N|).

Operationally, the techniques disclosed herein may involve performing any or all of the following functions. First, an LCE may send to other LCEs the characteristics of the classification problem and the characteristics of the validation set to which the LCEs should apply their classifier(s). Next, all the LCEs with a classifier and a validation set that satisfy the request (e.g., the classification and validation characteristics) may apply their classifier(s) to the validation set and send the results back to the requesting LCE. With the collected results, the requesting LCE may then compute the optimum voting strategy based on optimality criteria, such as how many correct classifications were performed by a pool of classifiers. The LCEs hosting classifiers selected to participate in the voting according to the computed optimal voting strategy are then contacted and may, in some embodiments, be requested to send their classifier to the LCE that launched the optimization. After reception of all the classifiers, the LCE that requested the voting optimization may be able to locally apply the optimum voting strategy computed, thereby reducing the amount of traffic used to conduct a vote. Alternatively, the remote classifiers may still be used to participate in a vote.

### - Initiating a Voting Optimization -

Let LCE(i) be a LCE facing a classification problem using its local classifier C(i,j). To improve the results that LCE(i) obtains with C(i,j) applied alone, LCE(i) may request a voting optimization by sending requests to other LCEs. In general, the optimization requests may include the characteristics of the classification problem and the characteristics of the validation set that may be used to determine the optimum set of voting classifiers.

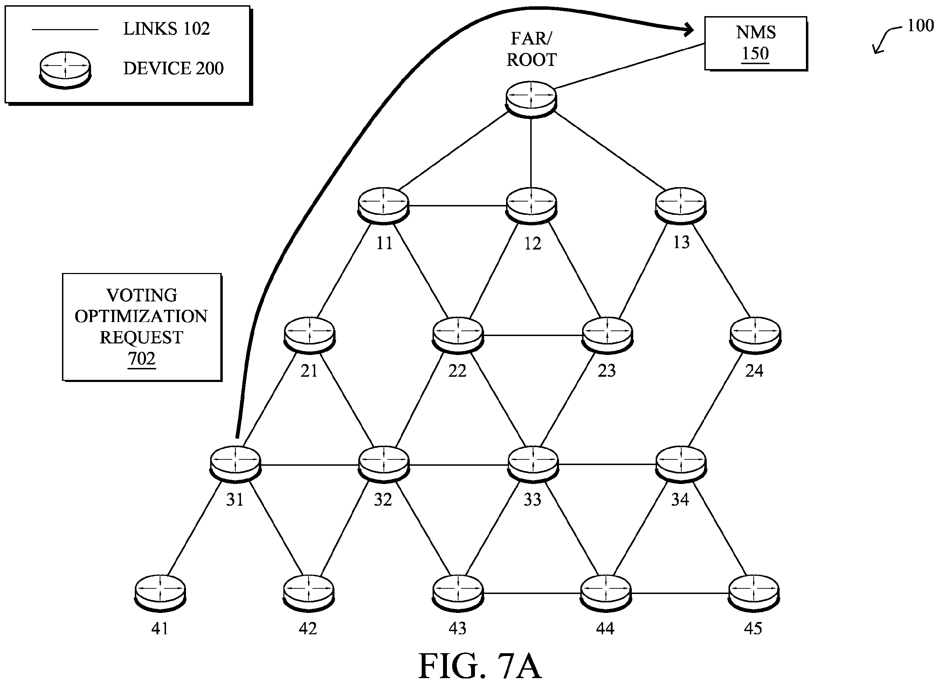

In one embodiment, a voting optimization request may be sent as an IPv4 or IPv6 unicast message to the NMS. For example, as shown in FIG. 7A, node 31 may send a voting optimization request 702 to NMS 150. In turn, the NMS may then contact the LCEs that host a classifier that is compatible with the specified classification problem and that have access to the specified validation set. In such an implementation, LCEs may register with the NMS which classifiers are available locally at the LCEs and which data sets are available to the LCEs.

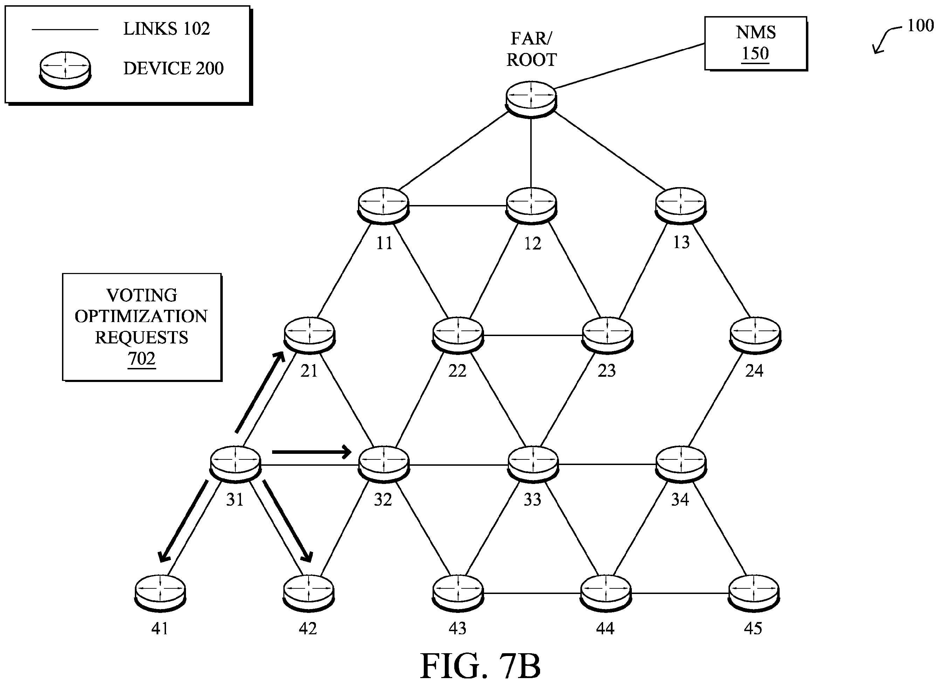

In another embodiment, a voting optimization request may be sent to a known multicast group containing all of the available LCEs in the network. For example, as shown in FIG. 7B, node 31 may alternatively multicast voting optimization request 702 directly to other known LCEs. Such a multicast group may be constructed during a registration process by including classifier information within CoAP messages. If unknown, the multicast group address may also be retrieved from an NMS, network controller, or other network device.

Voting optimization request 702 may include any or all of the following type-length-values (TLVs):
- L(i,j): A voting optimization request may specify the set of labels (e.g., output classes) that a classifier on the receiving LCE may provide. For instance, L(i,j)={ "Attack", "Normal"} is one possible set of labels that may be used for attack detection.
- V: A voting optimization request may also indicate the validation set that the receiving LCE is requested to apply. In general, V may be an identifier that uniquely identifies the validation set that the receiver may use, since all receivers may already have local access to the same validation sets. Optionally, if for some reason the receiver does not have local access to the validation set, LCE(i) can choose to send the whole validation set to the receiver.
- C(V): In some cases, a voting optimization request may also include a set of constraints to be applied to the validation set. For instance, the optimization request may include any of the following constraints: "only use samples in the validation set collected less than 1 day ago," "only use samples from nodes with more than a certain amount of traffic," "only use samples from nodes on batteries," etc. In another embodiment, if the entire validation set is sent instead of simply an identifier, such filtering may be carried out directly on the LCE sending the optimization request, thereby lower bandwidth consumption.

Upon reception of a voting optimization request, each receiving LCE(k) may check whether it has a classifier C(k,l) that satisfies the requested conditions (e.g., whether L(k,l)=L(i,j)). The receiving LCE(k) may also determine whether or not it has access to the validation set specified in the optimization request. In one embodiment, the access can be local to a memory of LCE(k). In another embodiment, LCE(k) may contact an NMS or a Network Controller and request access to the specified validation set. If any of these two conditions is not satisfied, LCE(k) may respond to the requesting LCE with an optimization refused message (e.g., an IPv4 or IPv6 message). In another embodiment, lack of acknowledgement from LCE(k) may be considered a negative reply by the requesting LCE.

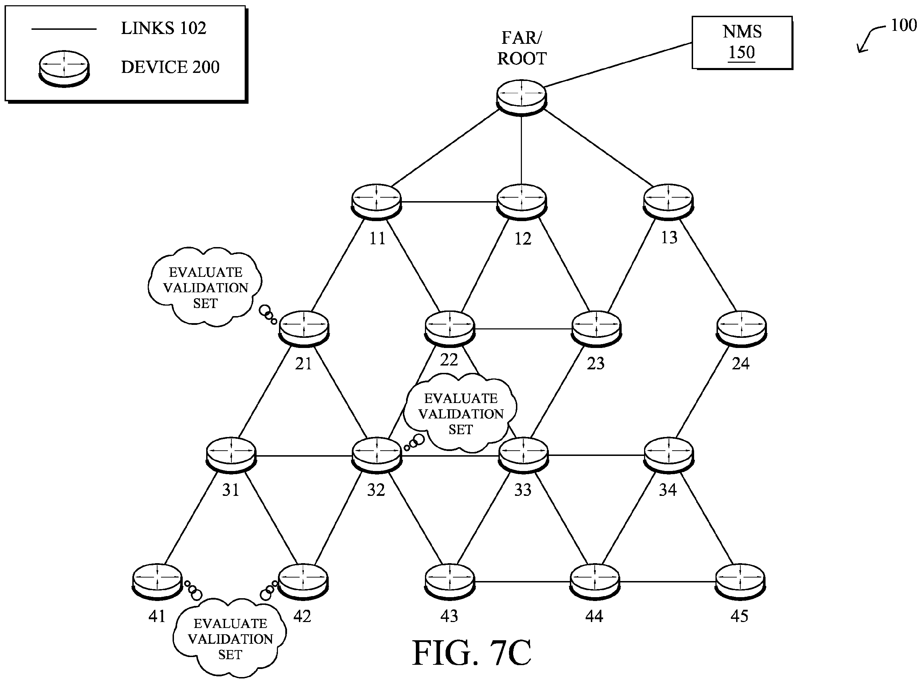

If an LCE has a classifier that satisfies the optimization request, as well as access to the requested validation set, the LCE may perform the requested classification. In other words, the LCE may apply its local classifier(s) C(k,l) to every sample of the validation set V (e.g., the classifiers that satisfy the optimization request). If the optimization request includes constraints for the validation set, the LCE may first apply the constraints to validation set before applying its local classifier(s). For example, as shown in FIG. 7C, each receiving LCE may use their local classifiers to evaluate the validation set, if possible.

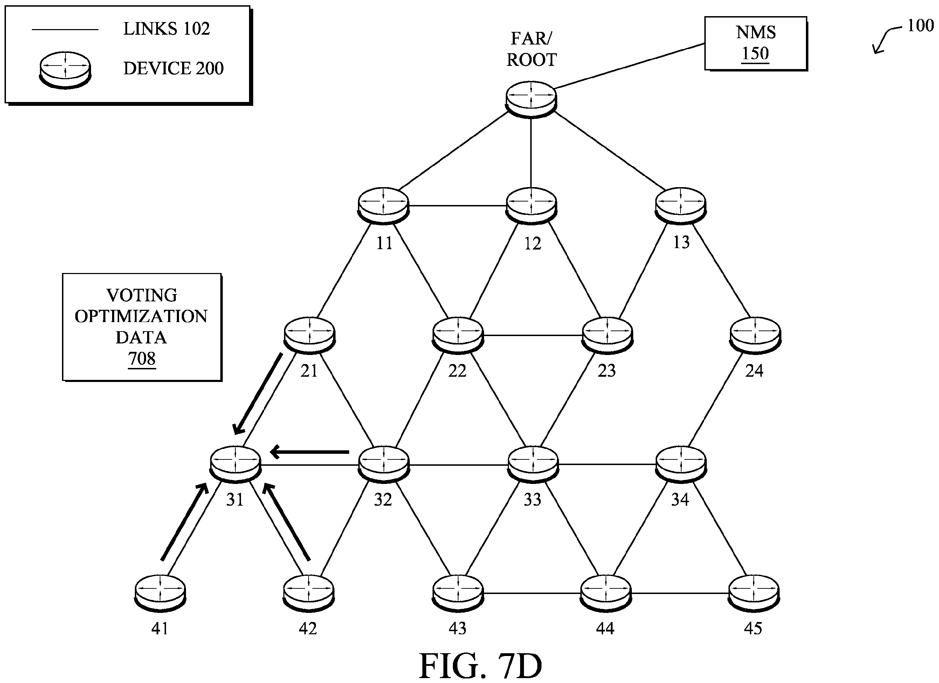

Once the LCEs complete their evaluation of the validation set using their local classifiers, the LCEs may send the results back to the requesting LCE as voting optimization data. For example, as shown in FIG. 7D, voting optimization data 708 may be sent back to node 31, which requested the optimization. Voting optimization data 708 may include any or all of the following TLVs:
- The ID of the classifier C(k,l) used: In some cases, the returned voting optimization data may include a unique identifier for each of the classifiers used by the responding LCE on the validation data.
- L(k,l): The voting optimization data may also include the outputs (e.g., labels) obtained by applying classifier C(k,l) to the full validation set V or the constrained validation set. Note that these outputs, which are the labels obtained for each sample, may be easily compressible.
- A confidence measure for each sample: In some cases, the optimization data may also include a confidence measure associated with the output of classifiers C(k,l) per sample in the validation set.
- A performance measurement for C(k,l): In some cases, the optimization data may also include a general confidence or performance measure of the applied classifier. For example, the performance value may be the recall of the classifier and/or the precision of the classifier.

In another embodiment, a given LCE may opt to send its one or more local classifiers to the requesting LCE in addition to, or in lieu of, the voting optimization data. For example, assume that a responding LCE has a classifier C(k,l) that satisfies the conditions in the optimization request, but does not have access to the validation request. In such a case, the responding LCE may opt to send classifier C(k,l) to the requesting LCE. In this case, the requesting LCE may locally apply classifier C(k,l) to the validation set, to obtain the voting optimization data. Note that in cases in which all voting is performed locally by the requesting LCE (e.g., using different classifiers), classifier C(k,l) will already be resident on the requesting LCE at this point. Thus, a further request for the classifier will not be needed.

### - Voting Optimization -

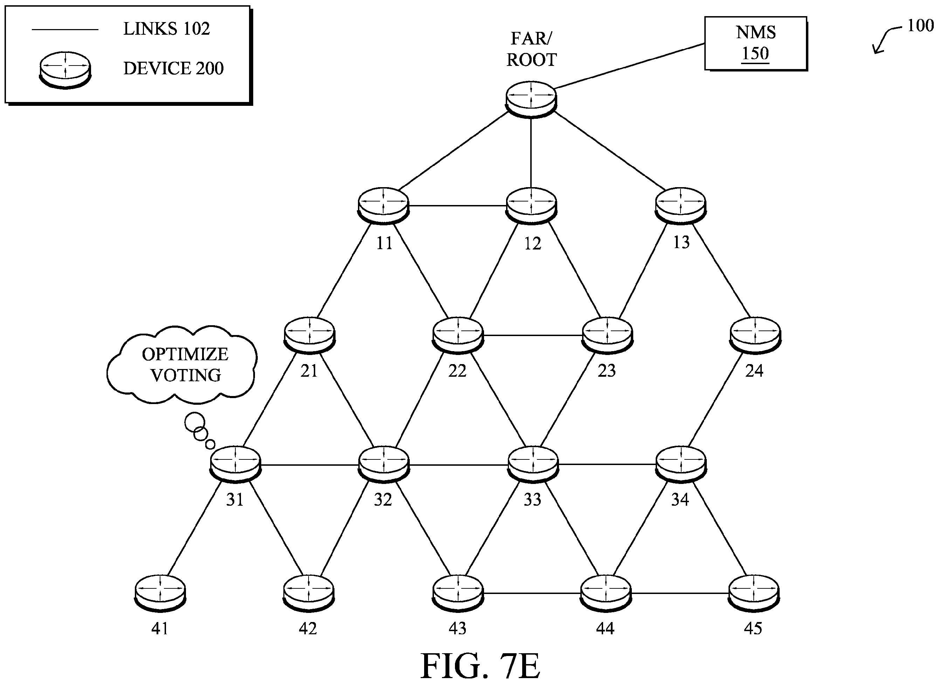

After reception of the voting optimization data (e.g., the results generated by the distributed classifiers on the validation set), the requesting LCE determines an optimal voting strategy for its classification problem. In cases in which a responding LCE sends its local classifier instead of the classifier's results, the requesting LCE may obtain the corresponding optimization data by apply the received classifier to the validation set. For example, as shown in FIG. 7E, node 31 may determine an optimal set of voters and/or an optimal threshold to reach a consensus based on the voting optimization data 708 received from the distributed LCEs.

In various embodiments, the optimum voting strategy may be computed by an optimization process that takes as input all of the collected results of the distributed classifiers (e.g., the optimization data) and gives as output the optimum set of classifiers (N) and/or the optimum value of the voting agreement (k). These optimum values may be optimized with respect to a predefined optimality criterion. Such a criterion may be, for example, to maximize the number of well-classified samples, to maximize the number of well-classified samples of a particular class, to minimize the classification performance variation with respect to a particular parameter, to minimize a predefined weighted error measure, etc.

Voting optimization may be treated by a device as a discrete optimization problem that seeks to maximize or minimize an objective function subject to one or several constraints, and where all the variables involved take only natural values. For purposes of illustration, let f_V(k,N) be a function that counts the number of correctly classified samples in the validation set V considering a consensus of at least k classifiers in the set of classifiers N. For example, assume that k=2, N={C(i,j), C(k,l), C(m,n)}, and that the correct label for a particular sample in V is "attack." In such a case, at least two of the classifiers in N may label the sample as "attack" for the consensus to be correct. If so, f_V(k,N) will increment the number of correctly classified samples. Otherwise, the consensus reached on the particular sample will be ignored by the function. In various embodiments, such a function may be treated as a discrete optimization problem that seeks to maximize f_V(k,N) subject to two conditions:
1.) N may be a subset of the whole set of classifiers that are available; and
2.) k may satisfy: 1 <= k <= |N|.
In other words, the number of eligible voters, as well as the vote count threshold for a consensus, may be reduced by the optimization problem, while still ensuring the number of correct voting results is maximized.

### - Centralized Voting -

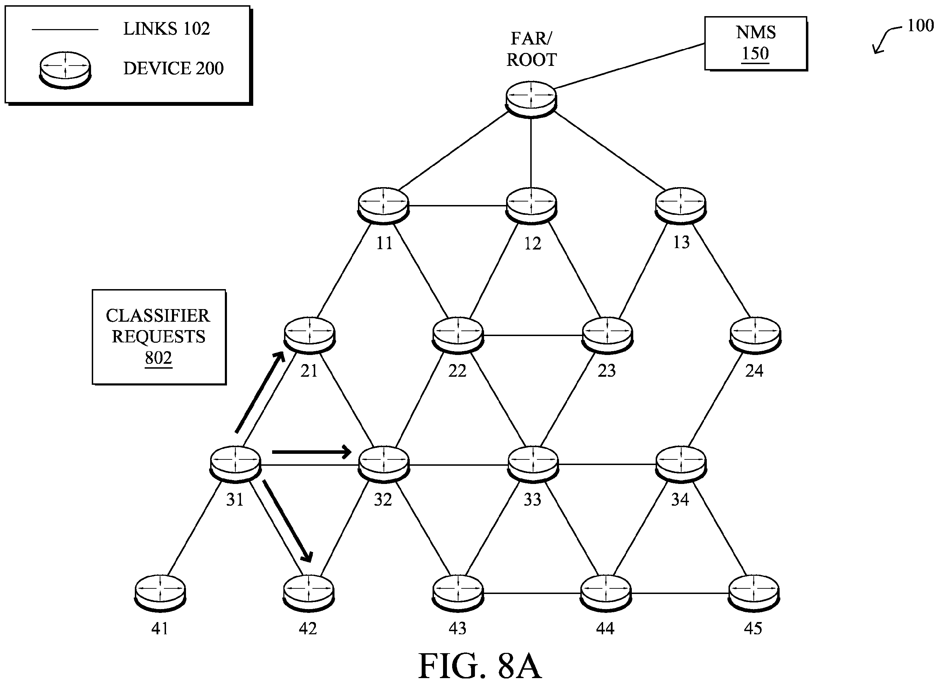

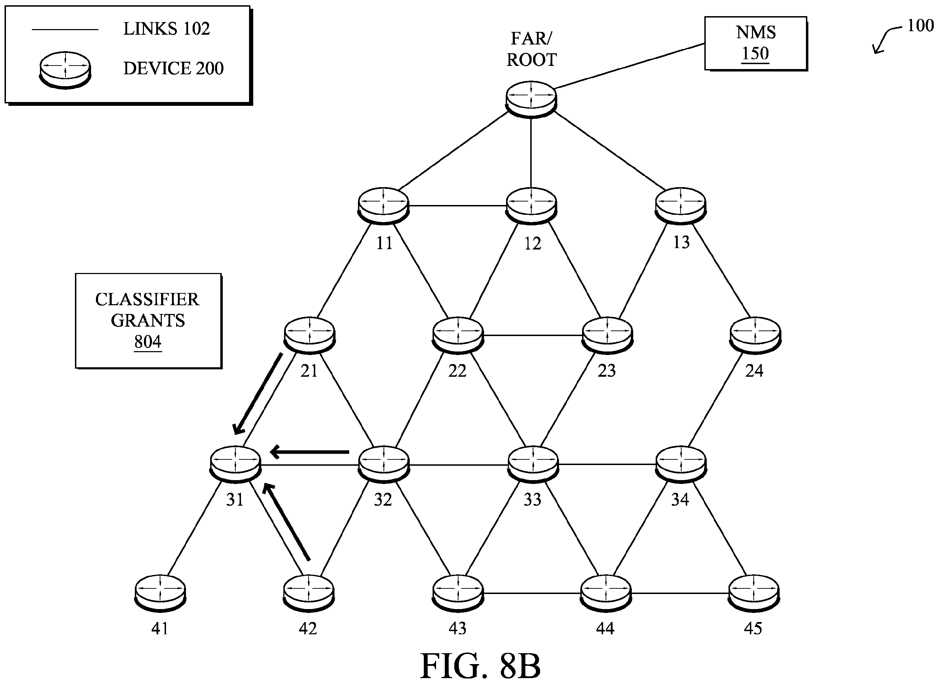

Once LCE(i) has computed N, the set of classifiers that may participate in the voting, LCE(i) may contact every LCE hosting one of the selected classifiers. For example, the requesting LCE may send a classifier request to each LCE that hosts one or more of the classifiers in N. For example, as shown in FIG. 8A, assume that nodes 21, 32, and 42 host classifiers that were selected as voters by node 31. In such a case, node 31 may send classifier requests 802 to the selected nodes. In one embodiment, classifier request 802 may be an IPv4 or IPv6 message that identifies the classifier or classifiers requested from the LCE. For example, classifier request 802 may include the set {C(k,l), C(k,r)}, which identifies the hosted classifiers.

In response to receiving a classifier request, an LCE may reply with a classifier grant message 804, if the requesting LCE(i) is granted access to the local classifier(s). In one embodiment, classifier grant message 804 includes the requested classifier(s), thereby allowing the requesting LCE to perform centralized voting going forward. In other words, the classifiers selected to vote may be executed locally by the requesting LCE after receipt of classifier grant messages 804. For instance, if a particular classifier is based on ANNs, the classifier grant message may contain the weights of the links between neurons, the activation function of the neurons, and any parameter required by these activation functions. Advantageously, performing all of the voting locally at the requesting LCE reduces network overhead in comparison to distributed voting, but at a tradeoff of requiring the use of additional resources by the LCE. If a consensus is reached, the LCE may then initiate corrective measures or generate an alert, such as alert 508 shown in FIG. 5B.

In some cases, an LCE may refuse to send its classifier to the requesting LCE and/or a distributed voting process may be used. For example, confidentiality issues, a policy defined in a policy engine, or other such factors may prevent the LCE from granting access to the requested classifier(s). In such a case, the refusing LCE may send a notification to the requesting LCE that identifies the classifier(s) for which access is not granted. On reception of a refusal, the requesting LCE may opt to exclude the restricted classifier(s) from the voting (e.g., by computing a new, optimized voting strategy). In some embodiments, a distributed voting mechanism may still be used even if the classifiers are not sent to the requesting LCE. For example, the requesting LCE may still employ a distributed voting mechanism, such as the process shown in FIGS. 6A-6D, in which the voting classifiers are executed locally by the distributed LCEs and the results are sent back to the initiating LCE.

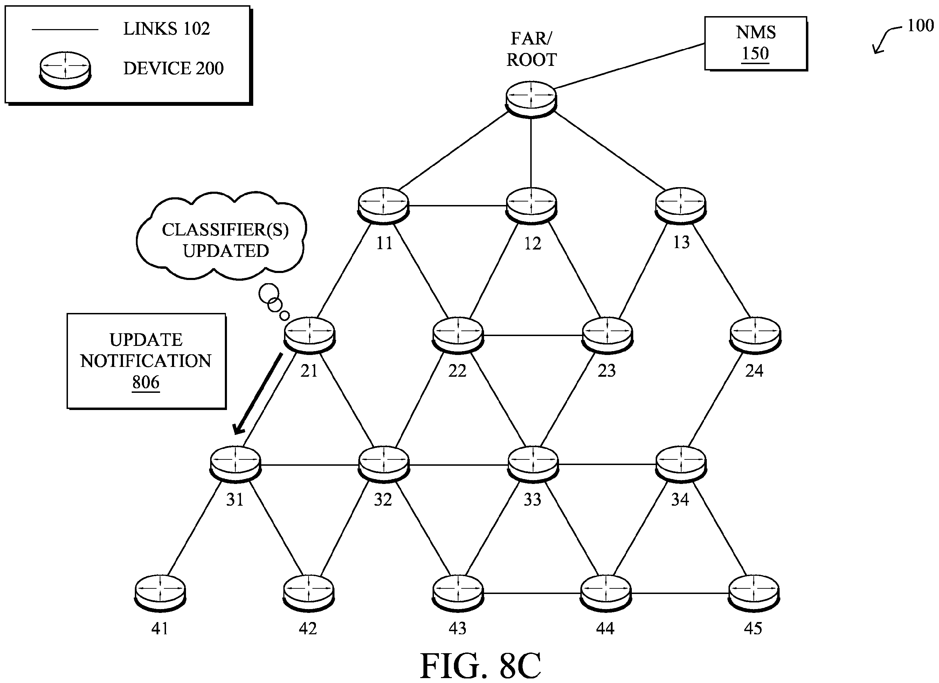

In some embodiments, a requesting LCE may be notified when any of the LCEs update a classifier selected as a voter. For example, the requesting LCE may set a parameter in classifier request 802 that requests notification of any relevant classifier updates. In such a case, the LCE receiving the request may add the requesting LCE to a subscription list. Each time a local classifier is updated, the LCE may then send to each of the subscribed LCEs the details of its new classifier (in this case, a proper reason code is included in the message). For example, as shown in FIG. 8C, assume that node 21 hosts a classifier that is used for purposes of voting by node 31 and that the classifier has been updated. In such a case, node 21 may send an update notification 806 to node 31 that includes the details of the new classifier. In some implementations, update notification 806 may be of the same format as classifier grant message 804 (e.g., notification 806 may include the updated classifier).

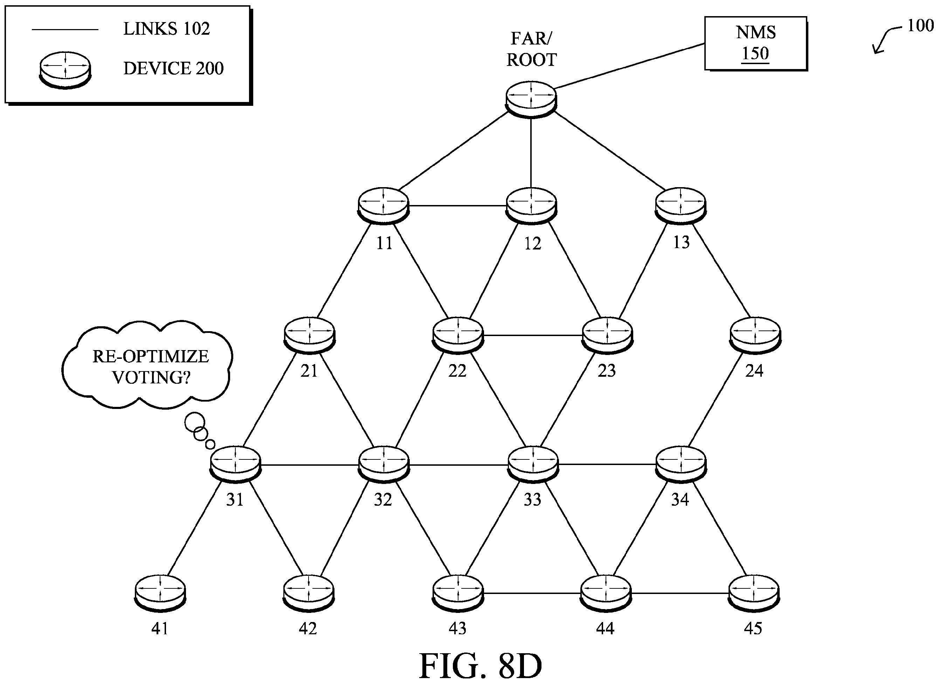

As shown in FIG. 8D, an LCE that is notified of a classifier update may decide whether or not to re-optimize the voting process based on the new classifier. For example, if the updated classifier is provided to node 31, node 31 may check its performance against the validation set and may even recomputed optimal values for k and N.

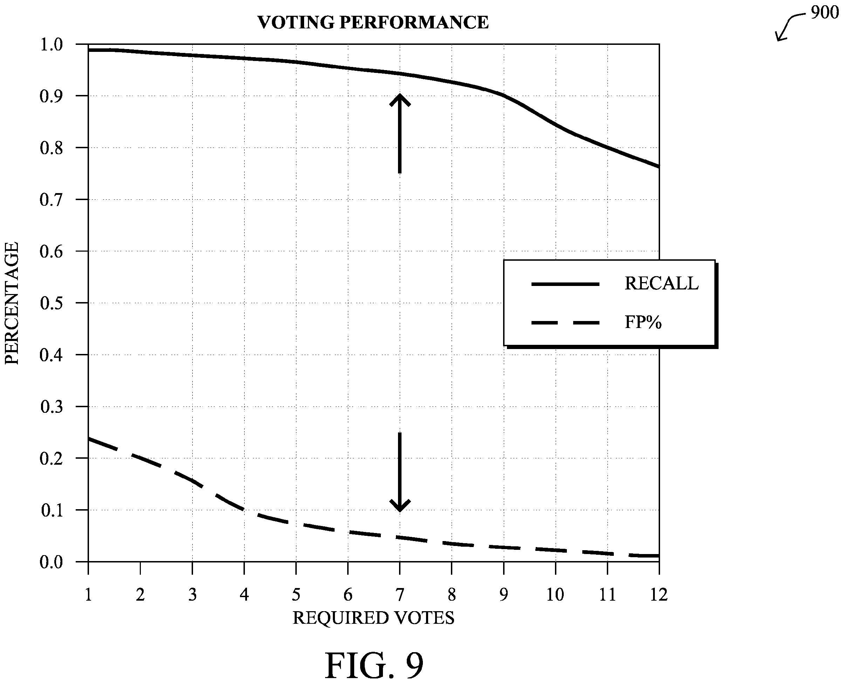

Referring now to FIG. 9, an example graph 900 is shown of voting performance as a function of the number of voters. As shown, a tradeoff may exist between the number of votes cast, the recall of the collective votes, and the percentage of false positives that result from the collective vote. For example, as the number of votes increases, the overall percentage of false positives also drops. Conversely, the recall of the collective votes also drops as the number of votes increases. Accordingly, a tradeoff may be made such that the recall of the process is above a threshold amount. For example, assume that a recall of 90% or greater is acceptable. In such a case, increasing the number of voters from 1 to 7 also demonstrates a decrease in the percentage of false positives from 23% to 5%.

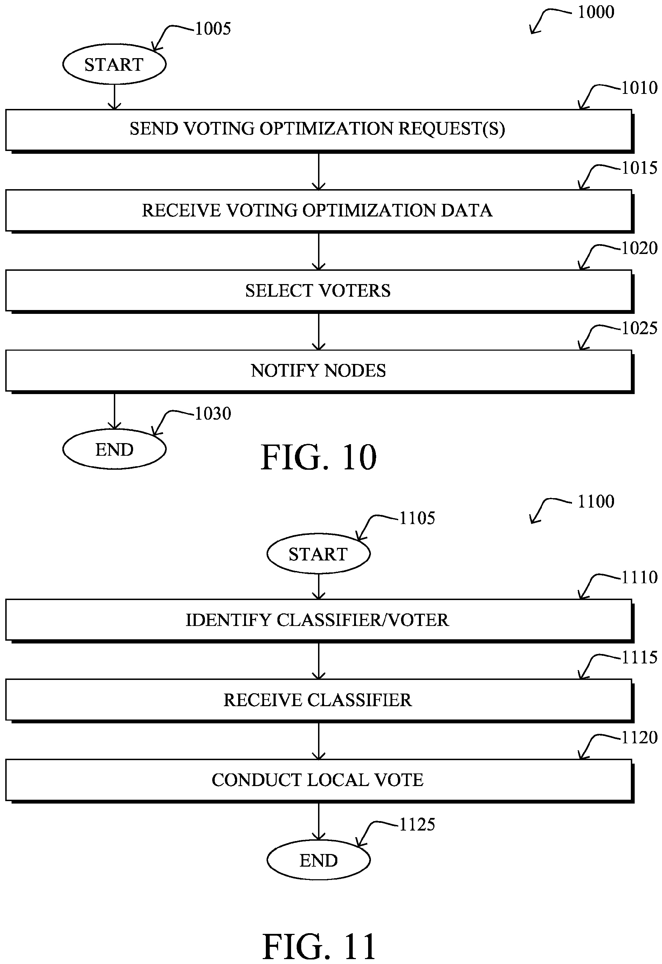

FIG. 10 illustrates an example simplified procedure for optimizing a distributed voting mechanism within a network in accordance with one or more embodiments described herein. The procedure 1000 may start at step 1005, and continues to step 1010, where, as described in greater detail above, one or more voting optimization requests are sent by a requesting LCE. In general, such a request includes data regarding the classification problem to be solved via voting and the validation set of data to be used in the voting optimization process. For example, a voting optimization request may specify the set of labels that are used by a particular classifier and identify a set of validation data to be used by other LCEs (e.g., either a full set of data or a set of validation data subject to one or more constraints). In one embodiment, the optimization request is sent to a central device, such as an NMS, and forwarded on to any other eligible LCEs/nodes. In another embodiment, the requests may be sent directly to the other LCEs.

At step 1015, voting optimization data is received from the other LCEs that received the optimization request, as described in greater detail above. Such optimization data may be based in part on a determination as to whether or not a responding LCE has a classifier that is compatible with the optimization request and whether or not the validation data indicated in the request is available. If both conditions are met, the responding LCE may use its eligible classifier(s) on the validation data. The results of the classifications may then be included in the voting optimization data that is returned to the requesting LCE. For example, the optimization data may identify the classifier(s), the results obtained by the classifier(s), and/or performance measurements regarding the classifiers or the results.

At step 1020, voters are selected, as described in greater detail above. In some embodiments, an optimal set of voters may be selected from among the classifiers indicated in the received optimization data. For example, an objective function may be optimized to select the set of voters/classifiers that were able to correctly classify the samples in the validation data the most number of times. In some embodiments, a vote count threshold may also be optimized as part of the objective function. In other words, the optimization may entail determining both the minimal set of voters that maximizes the number of correct results,, as well as the optimal threshold to reach consensus that yielded the best performance.

At step 1025, a notification is sent to the nodes that host the classifiers selected as voters, as detailed above. For example, classifier requests may be sent to the other LCEs that requests access to the selected classifiers. In one embodiment, the other LCEs may respond by sending the selected classifiers back to the requesting LCE. The requesting LCE can then use these classifiers to perform a vote locally. In another embodiment, a distributed voting mechanism may still be employed in which case the classifier requests ask the other LCEs for access to the selected classifiers. Procedure 1025 then ends at step 1030.

FIG. 11 illustrates an example simplified procedure for performing a local vote using an optimized set of voting classifiers, in accordance with one or more embodiments described herein. The procedure 1100 may start at step 1105, and continues to step 1110, where, as described in greater detail above, a particular classifier is identified as an optimal voter in a voting process. For example, as described above in procedure 1000, an optimal set of voting classifiers may be identified from a set of classifiers that are distributed throughout the network. Such voters may be used to verify the outcome of a particular classifier, such as the detection of a network attack. In some embodiments, an optimized vote count threshold may also be associated with the set of voters / classifiers. If the number of votes is at or above the threshold, the original classification may be validated. However, if the number of votes falls below the threshold, the original classification may be deemed a false positive.

At step 1115, the voting classifier may be received from another network node, as described in greater detail above. For example, in response to determining an optimal voting pool of classifiers that are located on other network nodes, a device may request the respective classifiers from the other nodes. In general, the received classifier may include any data needed to duplicate the remote classifier on the local device (e.g., parameters, input features, labels, etc.). For instance, if a particular classifier is based on ANNs, the received data may contain the weights of the links between neurons, the activation function of the neurons, and any parameter required by these activation functions.

At step 1120, as described in greater detail above, a local vote may be conducted using the received classifier. A local vote may be performed, for example, to validate a conclusion reached by a particular classifier. Notably, by performing the vote locally, local observation data may be used by the classifiers, thereby lowering the network usage by the voting process (e.g., in comparison to performing a distributed vote). If the vote validates the presence of an attack, the local device may then initiate further measures such as sending an alert to one or more other devices, making routing changes, etc. Procedure 1100 then ends at a step 1125.

It should be noted that while certain steps within procedures 1000-1100 may be optional as described above, the steps shown in FIGS. 10-11 are merely examples for illustration, and certain other steps may be included or excluded as desired. Further, while a particular order of the steps is shown, this ordering is merely illustrative, and any suitable arrangement of the steps may be utilized without departing from the scope of the embodiments herein. Moreover, while procedures 1000-1100 are described separately, certain steps from each procedure may be incorporated into each other procedure, and the procedures are not meant to be mutually exclusive.

The techniques described herein, therefore, provide for the computation of an optimized voting strategy for a particular classification problem, such as classifying network traffic as being either normal or indicative of an attack. In effect, the voting classifiers act as a meta-classifier that may demonstrate improved performance over that of a single classifier. In addition, a vote may be conducted using different types of classifiers (e.g., ANNs, SVMs, naive Bayesian, etc.), that have the same output labels (e.g., normal vs. attack) and may or may not have the same input features. Such a vote may be performed locally, thereby reducing network usage by a particular node, or may be performed in a distributed manner, thereby reducing the resource requirements of the node.

While there have been shown and described illustrative embodiments that provide for validating the detection of a network attack, it is to be understood that various other adaptations and modifications may be made. For example, while the techniques herein are described primarily with respect to attack-detection classifiers, the techniques herein may also be used to vote on different classification labels that are not related to attack detection (e.g., labels that relate to other network conditions). In addition, while the techniques herein are described primarily in the context of an LLN, the techniques herein may be applied more generally to any form of computer network, such as an enterprise network.

The foregoing description has been directed to specific embodiments. It will be apparent, however, that other variations and modifications may be made to the described embodiments, with the attainment of some or all of their advantages. For instance, it is expressly contemplated that the components and/or elements described herein can be implemented as software being stored on a tangible (non-transitory) computer-readable medium (e.g., disks/CDs/RAM/EEPROM/etc.) having program instructions executing on a computer, hardware, firmware, or a combination thereof. Accordingly this description is to be taken only by way of example and not to otherwise limit the scope of the embodiments herein as defined in the claims.

## Claims

1. A method of selecting a set of classifiers from a plurality of classifiers distributed in a network at a plurality of network nodes, the classifiers being selected to optimise a voting strategy for detecting network attacks on the network, the method comprising:
sending (1010), by a device (31), voting optimization requests (702) to a plurality of network nodes (21, 32, 41, 42), the voting optimization requests (702) identifying a validation data set comprising a set of known data;
receiving (1015), at the device (31), voting optimization data (708) from the plurality of network nodes (21, 32, 41, 42), wherein the network nodes generate the voting optimization data (708) by executing classifiers using the validation data set;
selecting (1020) a set of one or more voting classifiers from among the classifiers based on the voting optimization data; and
notifying (1025), by the device (31), one or more network nodes of the selection of the set of one or more voting classifiers, wherein the network nodes that are notified comprise the network nodes that host a voting classifier in the set of one or more selected voting classifiers.

2. The method as in claim 1, wherein the voting optimization requests (702) are sent to the plurality of network nodes via a network management server (150).

3. The method as in claim 1, wherein the voting optimization requests (702) are sent to a multicast group that includes the plurality of network nodes.

4. The method as in claim 1, wherein the voting optimization data (708) received from the plurality of network nodes includes a classifier identifier for a particular classifier and an output of the particular classifier based on the validation data set.

5. The method as in claim 4, wherein the voting optimization data (708) received from the plurality of network nodes includes at least one of: a confidence measurement for the output of the particular classifier or a confidence measurement for the particular classifier.

6. The method as in claim 1, further comprising:
determining a vote count threshold for the voting classifiers.

7. The method as in claim 6, further comprising:
optimizing an objective function that includes a number of correct votes and a number of correct voters to select the set of voting classifiers and to determine the vote count threshold.

8. The method as in claim 1, further comprising:
receiving a notification (806) that a classifier executed by a particular network node has been updated.

9. The method as in claim 1, further comprising:
receiving the voting classifiers at a local device; and
performing a vote using the voting classifiers at the local device.

10. The method as in claim 1, further comprising:
initiating a distributed vote using the voting classifiers on the plurality of network nodes.

11. An apparatus, comprising:
one or more network interfaces to communicate with a low power and lossy network (LLN);
a processor coupled to the network interfaces and adapted to execute one or more processes; and
a memory configured to store a process executable by the processor, the process when executed operable to perform a method according to any preceding claim.

12. A tangible, non-transitory, computer-readable medium having software encoded thereon, the software when executed by a processor operable to perform a method according to any of claims 1 to 10.

## Patentansprüche

1. Verfahren zum Auswählen eines Satzes von Klassifizierern aus einer Vielzahl von Klassifizierern, die in einem Netzwerk an einer Vielzahl von Netzwerkknoten verteilt sind, wobei die Klassifizierer dafür ausgewählt werden, eine Abstimmungsstrategie zum Erkennen von Netzwerkangriffen auf das Netzwerk zu optimieren, wobei das Verfahren Folgendes umfasst:
Senden (1010) von Abstimmungsoptimierungsanforderungen (702) durch eine Vorrichtung (31) an mehrere Netzwerkknoten (21, 32, 41, 42), wobei die Abstimmungsoptimierungsanforderungen (702) einen Validierungsdatensatz identifizieren, der einen Satz bekannter Daten umfasst;
Empfangen (1015) von Abstimmungsoptimierungsdaten (708) an der Vorrichtung (31) von der Vielzahl von Netzwerkknoten (21, 32, 41, 42), wobei die Netzwerkknoten die Abstimmungsoptimierungsdaten (708) durch Ausführen von Klassifizierern unter Verwendung des Validierungsdatensatzes erzeugen;
Auswählen (1020) eines Satzes von einem oder mehreren Abstimmungsklassifizierern aus den Klassifizierern basierend auf den Abstimmungsoptimierungsdaten; und
Benachrichtigen (1025) eines oder mehrerer Netzwerkknoten durch die Vorrichtung (31) über die Auswahl des Satzes von einem oder mehreren Abstimmungsklassifizierern, wobei die Netzwerkknoten, die benachrichtigt werden, die Netzwerkknoten umfassen, die einen Abstimmungsklassifizierer in dem Satz von einem oder mehreren ausgewählten Abstimmungsklassifizierern hosten.

2. Verfahren nach Anspruch 1, wobei die Abstimmungsoptimierungsanforderungen (702) über einen Netzwerkverwaltungsserver (150) an die Vielzahl von Netzwerkknoten gesendet werden.

3. Verfahren nach Anspruch 1, wobei die Abstimmungsoptimierungsanforderungen (702) an eine Multicast-Gruppe gesendet werden, die die Vielzahl von Netzwerkknoten umfasst.

4. Verfahren nach Anspruch 1, wobei die Abstimmungsoptimierungsdaten (708), die von der Vielzahl von Netzwerkknoten empfangen werden, eine Klassifiziererkennung für einen bestimmten Klassifizierer und eine Ausgabe des bestimmten Klassifizierers basierend auf dem Validierungsdatensatz umfassen.

5. Verfahren nach Anspruch 4, wobei die Abstimmungsoptimierungsdaten (708), die von der Vielzahl von Netzwerkknoten empfangen werden, mindestens eines von Folgendem umfassen: eine Vertrauensmessung für die Ausgabe des bestimmten Klassifizierers oder eine Vertrauensmessung für den bestimmten Klassifizierer.

6. Verfahren nach Anspruch 1, das ferner Folgendes umfasst:
Bestimmen eines Schwellenwerts für die Stimmenanzahl für die Abstimmungsklassifizierer.

7. Verfahren nach Anspruch 6, das ferner Folgendes umfasst:
Optimieren einer Zielfunktion, die eine Anzahl von richtigen Stimmen und eine Anzahl von richtigen Wählern umfasst, um den Satz von Wahlklassifizierern auszuwählen und den Schwellenwert für die Stimmenanzahl zu bestimmen.

8. Verfahren nach Anspruch 1, das ferner Folgendes umfasst:
Empfangen einer Benachrichtigung (806), dass ein von einem bestimmten Netzwerkknoten ausgeführter Klassifizierer aktualisiert wurde.

9. Verfahren nach Anspruch 1, das ferner Folgendes umfasst:
Empfangen der Abstimmungsklassifizierer an einer lokalen Vorrichtung; und
Durchführen einer Abstimmung unter Verwendung der Abstimmungsklassifizierer an der lokalen Vorrichtung.

10. Verfahren nach Anspruch 1, das ferner Folgendes umfasst:
Initiieren einer verteilten Abstimmung unter Verwendung der Abstimmungsklassifizierer auf der Vielzahl von Netzwerkknoten.

11. Vorrichtung, die Folgendes umfasst:
eine oder mehrere Netzwerkschnittstellen zur Kommunikation mit einem verlustbehafteten Netzwerk mit geringer Leistung (Low power and Lossy Network, LLN);
einen Prozessor, der mit den Netzwerkschnittstellen gekoppelt und dafür ausgelegt ist, einen oder mehrere Prozesse auszuführen; und
einen Speicher, der dafür konfiguriert ist, einen durch den Prozessor ausführbaren Prozess zu speichern, wobei der Prozess, wenn er ausgeführt wird, ein Verfahren nach einem der vorhergehenden Ansprüche durchführen kann.

12. Greifbares, nichtflüchtiges, computerlesbares Medium mit darauf codierter Software, wobei die Software von einem Prozessor ausgeführt wird, der ein Verfahren nach einem der Ansprüche 1 bis 10 ausführt.

## Revendications

1. Procédé de sélection d'un ensemble de classificateurs parmi une pluralité de classificateurs distribués dans un réseau au niveau d'une pluralité de nœuds de réseau, les classificateurs étant sélectionnés pour optimiser une stratégie de vote pour détecter des attaques de réseau sur le réseau, le procédé consistant à :
envoyer (1010), par un dispositif (31), des demandes d'optimisation de vote (702) à une pluralité de nœuds de réseau (21, 32, 41, 42), les demandes d'optimisation de vote (702) identifiant un ensemble de données de validation comprenant un ensemble de données connues ;
recevoir (1015), au niveau du dispositif (31), des données d'optimisation de vote (708) en provenance de la pluralité de nœuds de réseau (21, 32, 41, 42), les nœuds de réseau générant les données d'optimisation de vote (708) en exécutant des classificateurs au moyen de l'ensemble de données de validation ;
sélectionner (1020) un ensemble d'un ou plusieurs classificateurs de vote parmi les classificateurs sur la base des données d'optimisation de vote ; et
notifier (1025), par le dispositif (31), à un ou plusieurs nœuds de réseau, la sélection de l'ensemble d'un ou plusieurs classificateurs de vote, les nœuds de réseau qui ont fait l'objet de la notification comprenant les nœuds de réseau qui hébergent un classificateur de vote dans l'ensemble d'un ou plusieurs classificateurs de vote sélectionnés.

2. Procédé selon la revendication 1, dans lequel les demandes d'optimisation de vote (702) sont envoyées à la pluralité de nœuds de réseau par l'intermédiaire d'un serveur de gestion de réseau (150).

3. Procédé selon la revendication 1, dans lequel les demandes d'optimisation de vote (702) sont envoyées à un groupe de multidiffusion qui inclut la pluralité de nœuds de réseau.

4. Procédé selon la revendication 1, dans lequel les données d'optimisation de vote (708) reçues en provenance de la pluralité de nœuds de réseau incluent un identifiant de classificateur pour un classificateur particulier et une sortie du classificateur particulier sur la base de l'ensemble de données de validation.

5. Procédé selon la revendication 4, dans lequel les données d'optimisation de vote (708) reçues en provenance de la pluralité de nœuds de réseau incluent au moins une mesure parmi : une mesure de confiance pour la sortie du classificateur particulier et une mesure de confiance pour le classificateur particulier.

6. Procédé selon la revendication 1, consistant en outre à :
déterminer un seuil de nombre de votes pour les classificateurs de vote.

7. Procédé selon la revendication 6, consistant en outre à :
optimiser une fonction-objectif qui inclut un nombre de votes corrects et un nombre de votants corrects pour sélectionner l'ensemble de classificateurs de vote et pour déterminer le seuil de nombre de votes.

8. Procédé selon la revendication 1, consistant en outre à :
recevoir une notification (806) indiquant qu'un classificateur exécuté par un nœud de réseau particulier a été mis à jour.

9. Procédé selon la revendication 1, consistant en outre à :
recevoir les classificateurs de vote au niveau d'un dispositif local ; et
réaliser un vote au moyen des classificateurs de vote au niveau du dispositif local.

10. Procédé selon la revendication 1, consistant en outre à :
amorcer un vote distribué au moyen des classificateurs de vote sur la pluralité de nœuds de réseau.

11. Appareil, comprenant :
une ou plusieurs interfaces de réseau permettant de communiquer avec un réseau de faible puissance avec perte (LLN) ;
un processeur couplé aux interfaces de réseau et conçu pour exécuter un ou plusieurs processus ; et
une mémoire configurée pour stocker un processus exécutable par le processeur, le processus, lorsqu'il est exécuté, permettant de réaliser un procédé selon l'une quelconque des revendications précédentes.

12. Support tangible, non temporaire et lisible par ordinateur comprenant un logiciel codé, le logiciel, lorsqu'il est exécuté par un processeur, permettant de réaliser un procédé selon l'une quelconque des revendications 1 à 10.
